(19) Europäisches Patentamt
European Patent Office
Office européen des brevets

(11) **EP 2 105 883 A1**

(12) **EUROPÄISCHE PATENTANMELDUNG**

(43) Veröffentlichungstag:
**30.09.2009 Patentblatt 2009/40**

(51) Int Cl.:
***G06T 7/20*** *(2006.01)*

(21) Anmeldenummer: **09155518.5**

(22) Anmeldetag: **18.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **05.05.2008 DE 102008022091**
**18.03.2008 DE 102008014790**

(71) Anmelder: **Trident Microsystems (Far East) Ltd.**
**Grand Cayman (KY)**

(72) Erfinder:
• **Hahn, Marko**
**85579 Neubiberg (DE)**

• **Rieder, Peter**
**81737 München (DE)**
• **Tuschen, Christian**
**83607 Holzkirchen (DE)**
• **Scheffler, Günter**
**80939 München (DE)**
• **Schu, Markus**
**85435 Erding (DE)**

(74) Vertreter: **Epping - Hermann - Fischer**
**Patentanwaltsgesellschaft mbH**
**Ridlerstrasse 55**
**80339 München (DE)**

(54) **Verfahren zum Testen eines Bewegungsvektors**

(57) Beschrieben ist ein Verfahren zum Testen eines Bewegungsvektors, das aufweist: Bereitstellen wenigstens einer der Bildfolge zugeordneten Bewegungsinformation; Speichern eines ersten Bildausschnitts des ersten Bilds in einem ersten Zwischenspeicher und Speichern eines zweiten Bildausschnitt des zweiten Bilds in einem zweiten Zwischenspeicher, wobei eine Position des ersten Bildausschnitts in dem ersten Bild und eine Position des zweiten Bildausschnitts in dem zweiten Bild einen gegenseitigen Versatz aufweisen, der von der wenigstens einen Bewegungsinformation abhängig ist; Ermitteln eines ersten Bildblocks in dem ersten Bildausschnitt und eines zweiten Bildblocks in einem zweiten Bildausschnitt unter Verwendung des Bewegungsvektors; Vergleichen eines Inhalts des ersten und des zweiten Bildblocks.

FIG 3

**Beschreibung**

Die Erfindung betrifft ein Verfahren zum Testen eines Bewegungsvektors in der Bildverarbeitung.

In der Bildverarbeitung ist es bekannt, Bewegung in aufeinanderfolgenden Bildern einer Bildfolge zu schätzen. Diese Bewegung wird durch ein Feld von Bewegungsvektoren repräsentiert, das zwei aufeinanderfolgenden Bildern der Bildfolge zugeordnet ist. Ein Bewegungsvektor dieses Vektorfeldes enthält dabei eine Information über eine räumliche Verschiebung des Bildinhalts eines Bildblocks von einem momentanen Bild zu einem vorausgehenden oder nachfolgenden Bild der Bildfolge.

Solche Bewegungsvektoren können beispielsweise bei prädiktiven Codierverfahren wie MPEG-2 oder H263 eingesetzt werden. Bewegungsvektoren können außerdem für die Interpolation eines oder mehrerer Zwischenbilder verwendet werden, die zeitlich zwischen Originalbildern einer Bildfolge angeordnet sind. Die Bewegungsinformation wird hierbei verwendet, um sich bewegende Objekte bewegungsrichtig in den Zwischenbildern darzustellen, d.h. um ein Objekt in einem Zwischenbild an einer Position darzustellen, die zwischen den Positionen des Objekts in den Originalbildern liegt.

Bei sogenannten prädiktiven bzw. rekursiven Schätzverfahren ist es bekannt, zu jedem Bildblock eine Anzahl von möglichen Bewegungsvektoren, sogenannte Testvektoren, zu ermitteln und diese einzelnen Testvektoren zu "testen". Hierbei werden jeweils erste und zweite Bildblöcke, deren Position durch den Testvektor bestimmt ist und die in aufeinanderfolgenden Bildern der Bildfolge angeordnet sind, unter Verwendung eines Blockmatching-Verfahrens miteinander verglichen. Als Bewegungsvektor ausgewählt wird bei diesem Verfahren beispielsweise der Testvektor, der die größte Übereinstimmung zwischen den untersuchten Bildblöcken liefert. Die Testvektoren eines Bildblocks sind beispielsweise solche Bewegungsvektoren, die für Bildblöcke ermittelt wurden, die zeitlich und/oder räumlich benachbart zu dem betrachteten Bildblock liegen. Derartige prädiktive Schätzverfahren sind beispielsweise beschrieben in US 4,853,775 (Rouvrais), US 5,072,293 (de Haan) oder US 6, 782, 054 B2 (Bellers).

Für die Durchführung einer solchen Bewegungsschätzung ist es grundsätzlich bekannt, zwei aufeinanderfolgende Bilder für die Dauer der Bewegungsschätzung in einem Bildspeicher abzuspeichern. Übliche Bildspeicher, die in der Lage sind, ein ganzes Bild zu speichern, besitzen allerdings zu lange Zugriffszeiten, um eine Bewegungsschätzung mit den dazu erforderlichen Blockmatching-Operationen in Echtzeit durchzuführen. Solche Speicher sind beispielsweise DDR (double data rate) RAMs (Random Access Memories), DRAMs (Dynamic RAMs) oder SRAMs (Static RAMs). Speicher, die eine ausreichend kurze Zugriffszeit ermöglichen würde, sind mit den Speicherkapazitäten, wie sie für die Speicherung eines gesamten Bildes benötigt würden, entweder nicht verfügbar oder zu teuer. So sind für ein vollständiges HD-Bild mit 1080 Zeilen und 1920 Bildpunkten pro Zeile etwa 7,5 MByte Daten zu speichern, wenn man annimmt, dass pro Bildpunkt 30 bit für eine RGB Darstellung abzuspeichern sind (jeweils 10 bit für Rot (R), Grün (G) und Blau (B)).

Es ist daher bekannt, einen zusätzlichen (schnellen) Zwischenspeicher (Cachespeicher) für jedes der zwei für die Bewegungsschätzung verwendeten Bilder vorzusehen und in diesen Speichern nur jeweils Bildausschnitte der zwei Bilder abzuspeichern, die sich in den Bildern an der gleichen Position befinden. Die in diesen Speichern gespeicherten Bildausschnitte stehen dann für die Bewegungsschätzung zur Verfügung.

Aus Kostengründen ist es einerseits wünschenswert, diese Cachespeicher möglichst klein zu machen. Andererseits kann die Größe des Cachespeichers die Qualität der Bewegungsschätzung insofern dahingehend beeinflussen, dass beispielsweise solche Bewegungen nicht ermittelt werden können, bei denen der zugehörige Testvektor über die Grenzen des abgespeicherten Bildausschnitts "hinausreicht". In diesem Fall steht zu einem in dem einen Cachespeicher gespeicherten Bildblock bzw. Bildbereich kein zum Testen des Vektors erforderlicher Bildblock in dem zweiten Cachespeicher zur Verfügung.

Aufgabe der vorliegenden Erfindung ist es, ein verbessertes Verfahren zum Testen eines Bewegungsvektors zur Verfügung zu stellen. Diese Aufgabe wird durch ein Verfahren nach Anspruch 1 gelöst. Ausgestaltungen und Weiterbildungen sind Gegenstand von Unteransprüchen.

Bei einem Beispiel eines erfindungsgemäßen Verfahren zum Testen eines Bewegungsvektors, ist vorgesehen: Bereitstellen wenigstens einer Bildfolge zugeordneten Bewegungsinformation; Speichern eines ersten Bildausschnitts eines ersten Bilds der Bildfolge in einem ersten Zwischenspeicher und Speichern eines zweiten Bildausschnitt eines zweiten Bilds der Bildfolge in einem zweiten Zwischenspeicher, wobei eine Position des ersten Bildausschnitt in dem ersten Bild und eine Position des zweiten Bildausschnitts in dem zweiten Bild einen gegenseitigen Versatz aufweisen, der von der wenigstens einen Bewegungsinformation abhängig ist; Ermitteln eines ersten Bildblocks in dem ersten Bildausschnitt und eines zweiten Bildblocks in einem zweiten Bildausschnitt unter Verwendung des Bewegungsvektors; Vergleichen eines Inhalts der ersten und zweiten Bildblöcke.

Bei diesem Verfahren sind die Positionen des ersten und des zweiten Bildausschnitts, die jeweils kleiner sind als die ersten und zweiten Bilder, gegeneinander versetzt und zwar abhängig von der zu der Bildfolge ermittelten Bewegungsinformation. Diese Bewegungsinformation ist beispielsweise eine Bewegungsinformation die zu Bildern der Bildfolge ermittelt wurden, die in der Bildfolge vor dem ersten und zweiten Bild liegen. Man macht sich hierbei zu Nutze, dass eine für die Vergangenheit, d.h. für vorangehende Bilder der Folge ermittelte, Bewegungsinformation vielfach auch repräsentativ ist für die Bewegung eines aktuell untersuchten Bildpaares mit zwei aufeinanderfolgenden Bildern. Wurde beispielsweise für vorangehende Bilder eine starke Bewegung, d.h. wurden lange Bewegungsvektoren ermittelt, so kann angenommen werden, dass solche lange Bewegungsvektoren auch in dem aktuell zu testenden Bildpaar vorkommen, und somit zu testen sind. Durch den gegenseitigen Versatz der gespeicherten Bildausschnitte unter Berücksichtigung einer solchen zuvor ermittelten Bewegungsinformation ist sichergestellt, dass in dem ersten und zweiten Zwischenspeicher auch bei langen zu testenden Bewegungsvektoren die Bildblöcke gespeichert sind, die zum Testen dieser Bewegungsvektoren benötigt werden.

Die Ermittlung der Bewegungsinformation umfasst beispielsweise die Ermittlung eines ersten Bewegungsvektorfeldes mit mehreren Bewegungsvektoren, das einem Bildpunktpaar mit zwei aufeinanderfolgenden Bildern der Bildfolge zugeordnet ist, und das Ermitteln der Bewegungsinformation abhängig von wenigstens einem Bewegungsvektor des Bewegungsvektorfeldes. Zur Ermittlung der Bewegungsinformation werden alle oder zumindest einige der Bewegungsvektoren des ersten Bewegungsvektorfeldes beispielsweise gefiltert, wobei ein hierdurch erhaltener Filterwert der Bewegungsinformation entspricht. Diese Filterung umfasst beispielsweise die Bildung eines Mittelwertes aller oder einiger Bewegungsvektoren des Bewegungsvektorfeldes. Diese Filterung kann auch eine Minimalwertermittlung, durch die der kleinste/kürzeste aller Bewegungsvektoren oder einer Gruppe von Bewegungsvektoren des ersten Bewegungsvektorfeldes ermittelt wird, oder eine Maximalwertermittlung, durch die der größte/längste aller Bewegungsvektoren oder einer Gruppe von Bewegungsvektoren des ersten Bewegungsvektorfeldes ermittelt wird, umfassen. Sind die Vektoren vorzeichenbehaftet, so liefert ein Minimalwertfilter den längsten Vektor in negativer Richtung und ein Maximalwertfilter den längsten Vektor in positiver Richtung. In diesem Fall kann ein Versatz bzw. Offset der Bildausschnitte anhand einer Summe der so ermittelten Extremwerte ermittelt werden.
Der zu testende Bewegungsvektor ist beispielsweise Teil eines zu testenden zweiten Bewegungsvektorfeldes. Der gewählte Versatz zwischen dem ersten und dem zweiten Bildausschnitt kann dabei für alle zu testenden Bewegungsvektoren des zweiten Bewegungsvektorfeldes gleich sein - die absoluten Positionen der gespeicherten ersten und zweiten Bildausschnitte unterscheiden sich dabei selbstverständlich, und zwar abhängig von der Position des zu testenden Bewegungsvektors innerhalb des zweiten Bewegungsvektorfeldes.

Darüber hinaus kann der gewählte Versatz zwischen dem ersten und zweiten Bildausschnitt für einzelne zu testende Bewegungsvektoren des zweiten Bewegungsvektorfeldes auch unterschiedlich sein, d.h. für die einzelnen zu testenden Bewegungsvektoren des zweiten Vektorfeldes werden verschiedene Bewegungsinformationen für die Ermittlung des Versatzes zwischen dem ersten und dem zweiten Bildausschnitt verwendet. Bei einem Beispiel ist vorgesehen, die Bewegungsinformation für einen Bewegungsvektor des zweiten Vektorfeldes anhand wenigstens eines solchen Bewegungsvektors des ersten Vektorfeldes zu ermitteln, dessen Position in dem ersten Vektorfeld der Position des zu testenden Bewegungsvektors in dem zweiten Vektorfeld entspricht oder dessen Position benachbart zu der Position des zu testenden zweiten Bewegungsvektors ist. Hierbei können insbesondere mehrere Bewegungsvektoren des ersten Vektorfeldes berücksichtigt werden, deren Positionen identisch oder benachbart zu der Position des zu testenden Vektors sind. Diese mehreren Vektoren des ersten Vektorfeldes werden dabei gefiltert, um die benötigte Bewegungsinformation zur Berechnung des Versatzes zu erhalten. Als Filterverfahren eignen sich beispielsweise die oben genannten Filterverfahren.

Die bei der Ermittlung des Versatzes berücksichtigte Bewegungsinformation kann auch dadurch erhalten werden, dass Bewegungsvektoren mehrerer zuvor ermittelter Bewegungsvektorfelder gefiltert werden, beispielsweise unter Verwendung eines Filters/Reglers mit einem PI-Verhalten (PI= proportionalintegral).

Ausführungsbeispiele der vorliegenden Erfindung werden nachfolgend anhand von Figuren näher erläutert. In den Figuren sind nur die zum Verständnis der vorliegenden Erfindung notwendigen Merkmale dargestellt. Gleiche Bezugszeichen bezeichnen dabei gleiche Teile und Verfahrensschritte mit gleicher Bedeutung.

Figur 1    veranschaulicht einen zeitlichen Ausschnitt einer Bildfolge mit mehreren aufeinanderfolgenden Bildern und veranschaulicht aufeinanderfolgenden Bildern der Bildfolge zugeordnete Bewegungsvektorfelder.

Figur 2    veranschaulicht einen Ausschnitt einer Bildfolge mit zeitlich aufeinanderfolgenden Bildern und räumlich benachbarten Bildern und veranschaulicht Bildern der Bildfolge zugeordnete Bewegungsvektorfelder.

Figur 3    veranschaulicht Verfahrensschritte zum Testen eines Bewegungsvektors.

Figur 4    veranschaulicht ein Beispiel einer Vorrichtung zum Testen eines Bewegungsvektors, die eine Adressierungsschaltung aufweist.

Figur 5    zeigt ein Beispiel der Adressierungsschaltung, die ein Filter aufweist.

Figur 6    veranschaulicht ein Beispiel des Filters im Detail.

Figur 7    veranschaulicht ein weiteres Beispiel einer Vorrichtung zum Testen eines Bewegungsvektors, die eine Adressierungsschaltung aufweist.

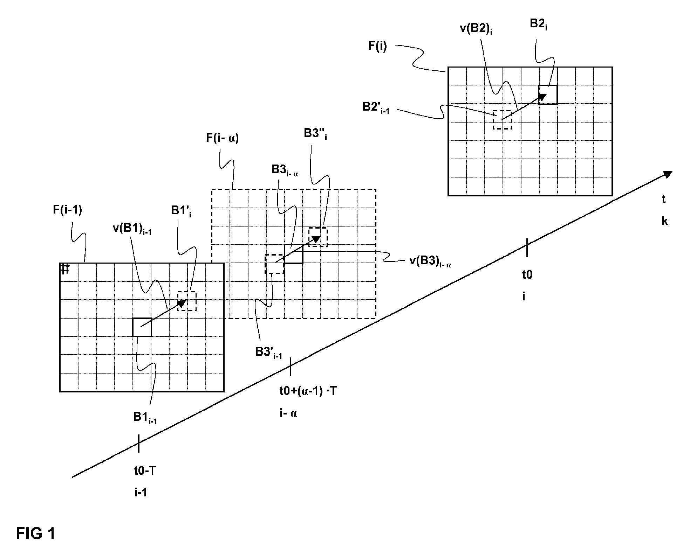

Zum besseren Verständnis zeigt Figur 1 schematisch einen zeitlichen Ausschnitt einer Bildfolge, die mehrere zeitlich aufeinanderfolgende Bilder aufweist. Dargestellt ist in Figur 1 ein Ausschnitt mit zwei aufeinanderfolgenden Bildern F(i-1), F(i). k bezeichnet dabei eine diskrete Zeitvariable. i-1 und i sind diskrete Zeitpunkte, zu denen die einzelnen Bilder F(i-1), F(i) vorliegen. Ein absoluter zeitlicher Abstand zwischen den zwei Bildern der Bildfolge beträgt beispielsweise T. Mit t und t0-T sind in Figur 1 beispielhaft solche absoluten Zeitpunkte bezeichnet, zu denen die Bilder F(i-1), F(i) vorliegen. Die einzelnen Bilder weisen jeweils eine Bildpunktmatrix mit einer Anzahl von Bildpunkten auf, was schematisch im linken oberen Bereich des Bildes F(i-2) angedeutet ist. Den einzelnen Bildpunkten sind dabei Bildinformationswerte, wie beispielsweise drei Farbintensitätswerte (RGB-Werte) für die Grundfarben Rot, Grün und Blau oder ein Luminanzwert (Y-Wert) und zwei Chrominanzwerte (UV-Werte) zugeordnet. Die den einzelnen Bildpunkten zugeordneten Bildinformationswerte können sich von Bild zu Bild ändern, wodurch eine bewegte Bilddarstellung möglich wird. Die den einzelnen Bildpunkten zugeordneten Bildinformationswerte können sich von Bild zu Bild ändern, wodurch eine bewegte Bilddarstellung möglich wird.

Den Bildern der Bildfolge sind Bewegungsvektorfelder zugeordnet. Die einzelnen Bewegungsvektorfelder, die nachfolgend auch als Vektorfelder bezeichnet werden, umfassen jeweils eine Anzahl von Bewegungsvektoren, wobei in Figur 1 aus Gründen der Übersichtlichkeit für jedes der zwei Bilder F(i-1), F(i) nur jeweils ein Bewegungsvektor dargestellt ist, nämlich ein Bewegungsvektor $v(BI)_{i-1}$ für einen Bildblock $B1_{i-1}$ in dem ersten Bild F(i-1) und ein Bewegungsvektor $v(B2)_i$ für einen Bildblock $B2_i$ in dem zweiten Bild F(i). Jeder dieser Bewegungsvektoren repräsentiert eine Bewegung des Bildinhalts des Bildblocks, dem er zugeordnet ist. So enthält beispielsweise der dem Bildblock $B1_{i-1}$ in dem ersten Bild zugeordnete Bewegungsvektor $v1(B1)_{i-1}$ eine Information darüber, an welcher Position in dem zweiten Bild F(i) sich der Inhalt des Bildblocks $B1_{i-1}$ wiederfindet. In dem dargestellten Beispiel ist dies die Position $B1'_i$. Der dem Bildblock $B2_i$ in dem zweiten Bild F(i) zugeordnete Bewegungsvektor $v(B2)_i$ enthält beispielsweise eine Information darüber, an welcher Position in dem ersten Bild F(i-1) sich der Inhalt des Bildblocks $B2_i$ wiederfindet. In dem dargestellten Beispiel ist dies die Position $B2'_{i-1}$.

In dem dargestellten Beispiel sind mit $Bn_a$ allgemein Bildblöcke in den einzelnen Bildern bezeichnet, wobei a die zeitliche Position des Bildes bezeichnet, dem der Bildblock entstammt. Die einzelnen Bildblöcke umfassen jeweils eine Anzahl von Bildpunkten, beispielsweise eine Bildpunktmatrix mit 8x8 oder 16x16 Bildpunkten. Die Bildblöcke sind beispielsweise in einem Blockraster angeordnet.

Für die nachfolgende Erläuterung sei angenommen, dass für das erste und zweite Bild Bildinformationswerte für die einzelnen Bildpunkte des Bildes bereits vorhanden sind. Diese Bilder werden daher nachfolgend als Originalbilder der Bildfolge bezeichnet. Aus verschiedenen Gründen kann es wünschenswert sein, zwischen zwei solchen Originalbildern ein oder mehrere Zwischenbilder zu interpolieren. In Figur 1 ist beispielhaft ein solches Zwischenbild (gestrichelt) dargestellt, das zeitlich zwischen dem ersten und zweiten Bild F(i-1), F(i) liegt und dessen Bildinhalt anhand von Bildinhalten der Originalbilder, wie beispielsweise den Bildinhalten des ersten und zweiten Bildes F(i-1), F(i) zu interpolieren ist. Der zeitliche Abstand dieses Zwischenbildes $F(i-\alpha)$ beträgt zu dem ersten Bild F(i-1) $\alpha \cdot T$ und zu dem zweiten Bild F(i) $(1-\alpha) \cdot T$. Die zeitliche Lage dieses Zwischenbildes bezogen auf das erste und zweite Bild F(i-1), F(i) wird als Interpolationsphase oder Bewegungsphase bezeichnet, die durch den Parameter $\alpha$, mit $0 \leq \alpha \leq 1$, bestimmt ist. Für den Spezialfall $\alpha$=0 entspricht das Zwischenbild dabei dem ersten Bild F(i-1), und für den Spezialfall $\alpha$=1 entspricht das Zwischenbild dem zweiten Bild P(k).

Zum Zweck einer solchen Interpolation wird das Zwischenbild $F(i-\alpha)$ in Bildblöcke unterteilt, die in einem Blockraster angeordnet ist. Dieses Blockraster ist in Figur 1 gestrichelt dargestellt und umfasst beispielsweise Bildblöcke mit 8x8 oder 16x16 Bildpunkten. In diesem Zusammenhang sei darauf hingewiesen, dass in Figur 1 und den nachfolgend noch erläuterten Figuren zu Zwecken der Erläuterung lediglich Ausschnitte der einzelnen Bilder dargestellt sind. Übliche Videobilder umfassen beispielsweise 135x240 Bildblöcke mit je 8x8 Bildpunkten, d.h. insgesamt 1080x1920 Bildpunkte bzw. Pixel.

Für die Interpolation werden zu den einzelnen Bildblöcken des Zwischenbildes $F(i-\alpha)$ Bewegungsvektoren ermittelt. Mit $B3_{i-\alpha}$ ist in Figur 1 beispielhaft ein solcher Bildblock des Zwischenbildes $F(i-\alpha)$ bezeichnet. Ein zu einem solchen Bildblock $B3_{i-\alpha}$ des Zwischenbildes $F(i-\alpha)$ ermittelter Bewegungsvektor $v(B3)_{i-\alpha}$ repräsentiert dabei eine Bewegung des Inhalts dieses Bildblocks und enthält eine Information darüber, welcher Bildblock in dem ersten Bild F(i-1) und welcher Bildblock in dem zweiten Bild F(i) für eine Interpolation des Bildinhalts des Bildblocks $B3_{i-\alpha}$ des Zwischenbildes $F(i-\alpha)$ verwendet werden soll. In dem dargestellten Beispiel sind dies die Bildblöcke $B3'_{i-1}$ und $B3''_i$ in dem ersten und dem zweiten Bild F(i-1), F(i). Diese Bildblöcke $B3'_{i-1}$ und $B3''_i$ der Originalbilder besitzen die gleiche Größe wie der zu interpolierende Bildblock $B3_{i-\alpha}$, müssen jedoch nicht notwendigerweise auf dem Blockraster, d.h. an Rasterpositionen des Blockrasters, liegen. Die Bildinhalte der beiden anhand des Bewegungsvektors $v(B3)_{i-\alpha}$ ermittelten Bildblöcke $B3'_{i-1}$ und $B3''_i$ der Originalbilder können dabei auf beliebige, grundsätzlich bekannte Art und Weise gemischt werden, um dadurch den Bildinhalt des Bildblocks $B3_{i-\alpha}$ des Zwischenbildes $F(i-\alpha)$ zu interpolieren. Beim Mischen werden diese Bildinhalte beispielsweise gewichtet und zwar abhängig von dem zeitlichen Abstand zwischen dem zu interpolierenden Zwischenbild F(i-α) und den Originalbildern F(i), F(i-1). Ein solches Vorgehen ist grundsätzlich bekannt, so dass auf weitere Ausführungen hierzu verzichtet werden kann.

Wesentlich für eine korrekte Zwischenbildinterpolation ist eine zuverlässige Bewegungsschätzung, d.h. eine zuverlässige Ermittlung der Bewegungsvektoren zu den einzelnen Bildblöcken des Zwischenbildes.

Wie bereist erläutert, sind die einzelnen Bewegungsvektoren eines Vektorfeldes jeweils Blöcken eines Blockrasters zugeordnet. Diese Blöcke sind in Figur 1 für die Originalbilder F(i-1), F(i) und für das Zwischenbild gepunktet dargestellt. Für die Bezeichnung eines an einer bestimmten Position des Raster befindlichen Blockes wird nachfolgend die Nomenklatur $(a, b)_c$ verwendet, wobei a die horizontale Position des Blockes innerhalb des Rasters, b die vertikale Position des Bildblockes innerhalb des Rasters und c die Position des Bildes, dem das Vektorfeld zugeordnet ist, bezeichnet.

Wie erläutert sind die einzelnen Bewegungsvektoren eines Vektorfeldes jeweils Bildblöcken eines Bildes zugeordnet. Dieses Bild kann ein Originalbild oder ein zwischen Originalbildern der Bildfolge zu interpolierendes Zwischenbild sein. Der Bildinhalt eines Bildblockes eines solchen Zwischenbildes kann dabei unter Verwendung des dem Bildblock zugeordneten Bewegungsvektors interpoliert werden, indem beispielsweise die Bildinhalte der Bildblöcke gemischt werden, die sich in aufeinanderfolgenden Bildern der Bildfolge am Anfangs- und Endpunkt des Bewegungsvektors befinden. Die Lage der für die Interpolation zu berücksichtigenden Bildblöcke in dem ersten und zweiten Bild F(i-1), F(i) bezogen auf die Lage des zu interpolierenden Bildblocks ist dabei von dem Bewegungsvektor abhängig. Darüber hinaus ist die Lage der für die Interpolation zu berücksichtigenden Bildblöcke in dem ersten und zweiten Bild bezogen auf die Lage des zu interpolierenden Bildblocks abhängig von der Interpolationsphase, d.h. der zeitlichen Lage des zu interpolierenden Bildes bezogen auf die Bilder der (Original-)Bildfolge. Liegt das zu interpolierende Bild beispielsweise zeitlich in der Mitte zwischen zwei Originalbildern, so liegt die Position des zu interpolierenden Bildblocks in einer durch den Bewegungsvektor $v(B3)_{i-α}$ vorgegebenen Richtung in der Mitte zwischen den Bildblöcken $B1_{i-1}$, $B2_i$ des ersten und zweiten Bildes F(i-1), F(i).

Eine einem Bildblock eines Originalbildes zugeordnete Bewegungsinformation kann beispielsweise zu Codierungszwecken, wie z.B. für eine MPEG-Codierung, genutzt werden.

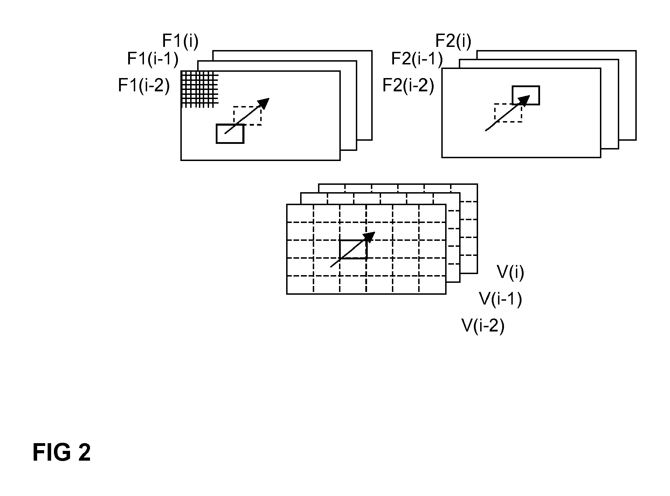

Für die bisherige Erläuterung wurde davon ausgegangen, dass ein Vektorfeld zu Bildern ermittelt wird, die in einer Bildfolge zeitlich aufeinanderfolgen. Selbstverständlich kann ein solches Vektorfeld auch zu Bildern ermittelt werden, die räumlich benachbart sind, die also beispielsweise unterschiedliche Kamerapositionen repräsentieren. Das Vektorfeld kann in diesem Fall dazu genutzt werden, ein Bild zu interpolieren, das räumlich zwischen den beiden Bildern liegt, das also eine synthetische dritte Kameraposition repräsentiert. Bei einem solchen Verfahren sind mindestens zwei Teil-Bildfolgen vorhanden. Ein Vektorfeld wird in diesem Fall nicht für zeitlich aufeinanderfolgende Bilder einer Bildfolge sondern für zum gleichen Zeitpunkt vorliegende Bilder unterschiedlicher Teil-Bildfolgen ermittelt. Dies ist in Figur 2 veranschaulicht, in der mit F1(i-2),... Bilder einer ersten Teil-Bildfolge und mit F2(i-2),.... Bilder einer zweiten Teil-Bildfolge bezeichnet ist. V(i-2),... bezeichnet in diesem Fall jeweils Vektorfelder die zu zwei gleichzeitig vorliegenden Bildern der beiden Bildfolgen ermittelt wurden. Die beiden Teil-Bildfolgen bilden in diesem Fall eine Bildfolge, die sowohl zeitlich aufeinanderfolgende Bilder als auch räumlich benachbarte Bilder umfasst.

Die nachfolgende Erläuterung bezieht sich auf beliebige Vektorfelder, also solche Vektorfelder, die zeitlich aufeinanderfolgenden Bildern einer Bildfolge zugeordnet sind, oder auf Vektorfelder, die räumlich benachbarten Bildern einer Bildfolge zugeordnet sind. Unter "benachbarte Bilder" einer Bildfolge sind nachfolgend somit entweder zeitlich oder räumlich benachbarte Bilder zu verstehen.

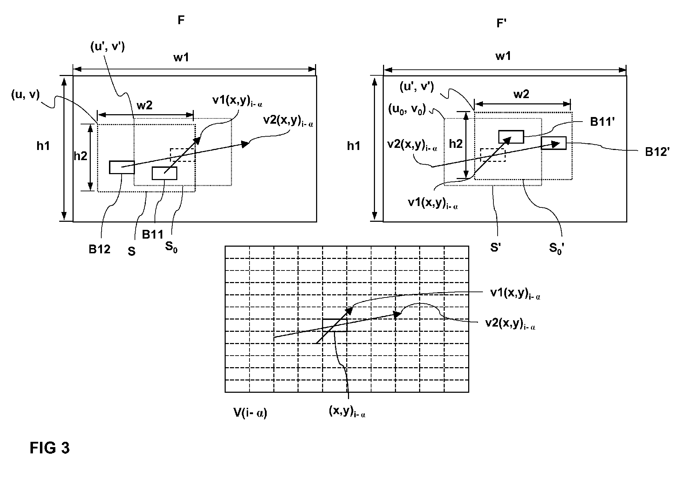

Unabhängig davon, ob ein Bewegungsvektorfeld einem Originalbild oder einem zu interpolierenden Zwischenbild zugeordnet ist, erfordert eine Ermittlung des Bewegungsvektorfeldes einen Vergleich der Bildinhalte von Bildblöcken in zwei unterschiedlichen Originalbildern. Zur Ermittlung der einzelnen Bewegungsvektoren eines Bewegungsvektorfeldes können grundsätzlich beliebige, hinlänglich bekannte Bewegungsschätzverfahren eingesetzt werden. Gemeinsam ist diesen Verfahren, dass ein Vektor, der als möglicher Bewegungsvektor für das Vektorfeld in Frage kommt, getestet wird. Hierzu werden die Inhalte der Bildblöcke deren Position in benachbarten Originalbildern durch den zu testenden Bewegungsvektor vorgegeben ist, miteinander verglichen. Ein Beispiel für ein solches Testen eines Bewegungsvektors wird nachfolgend anhand von Figur 3 erläutert.

Figur 3 zeigt schematisch zwei Originalbilder F, F' einer Bildfolge, anhand derer ein Bewegungsvektorfeld V(i-α) zu ermitteln ist. Diese beiden Bilder F, F' sind beispielsweise zeitlich benachbarte Bilder einer Bildfolge, wie beispielsweise die Bilder F(i-1), F(i) gemäß Figur 1, oder sind beispielsweise räumlich benachbarte Bilder zweier Teil-Bildfolgen. $(x, y)_{i-α}$ bezeichnet einen für die nachfolgende Erläuterung näher betrachteten Block eines Bildes bzw. Blockrasters, dem das Vektorfeld V(i-α) zugeordnet ist. Dieses Bild kann bezugnehmend auf die bisherige Erläuterung ein Originalbild, wie z.B. eines der Bilder F(i-1), F(i) in Figur 1, oder ein Zwischenbild, wie z.B. das Bild F(i-α) gemäß Figur 1, sein. Lediglich zu Zwecken der Erläuterung entspricht das in Figur 3 dargestellte Bild, dem das Vektorfeld zugeordnet ist, einem zeitlich oder räumlich zwischen dem ersten und zweiten Bild F, F' liegenden Bild.

Zur Erläuterung sei angenommen, dass für diesen Block $(x, y)_{i-α}$ zwei Bewegungsvektoren $v1(x, y)_{i-α}$ und v2

$(x, y)_{i-\alpha}$ zu testen sind. Mit B11 und B11' sind in Figur 2 die Bildblöcke in dem ersten und zweiten Bild F, F' bezeichnet, deren Positionen durch den ersten Bewegungsvektor $v1(x, y)_{i-\alpha}$ vorgegeben sind, und mit B2, B2' sind die Bildblöcke in dem ersten und zweiten Bild F, F' bezeichnet, deren Positionen durch den zweiten Bewegungsvektor $v2(x, y)_i$ bestimmt sind. Die relative Lage dieser Bildblöcke bezogen auf den Block $(x, y)_{i-\alpha}$ des Bildes, zu dem die beiden Vektoren $v1 (x, y)_i$, $v2 (x, y)_i$ zu testen sind, wird in Figur 2 dadurch anschaulich, dass die Lage diese Blocks $(x, y)_{i-\alpha}$ in dem ersten und zweiten Bild F, F' gestrichelt eingezeichnet ist. In diesem Zusammenhang sei angemerkt, dass die Bildblöcke, die durch die Bewegungsvektoren in dem ersten und zweiten Bild vorgegeben sind, nicht an das Blockraster gebunden sind. Die Bewegungsvektoren können also eine "Auflösung" besitzen, die feiner als das Blockraster ist bzw. die nicht an das Blockraster gebunden ist.

Grundsätzlich werden zum Testen eines Bewegungsvektors die Bildinhalte der Bildblöcke in dem ersten und zweiten Bild F, F' miteinander verglichen, deren Positionen durch den jeweiligen Bewegungsvektor vorgegeben sind. So ist zum Testen des ersten Bewegungsvektors $v1 (x, y)_{i-\alpha}$ beispielsweise ein Vergleich der Inhalte Bildblöcke B11, B11' und zum Testen des zweiten Bewegungsvektors $v2(x, y)_{i-\alpha}$ ein Vergleich der Inhalte Bildblöcke B12, B12' erforderlich. Ein solcher Vergleich kann in hinlänglich bekannter Weise erfolgen, beispielsweise dadurch, dass die zu vergleichenden Bildblöcke bildpunktweise miteinander verglichen werden. Ein solcher Vergleich umfasst beispielsweise die Ermittlung der Summe der Absolutwerte der Bildpunktdifferenzen (SAD, Sum of Absolute Differences). Hierbei werden zu Bildpunkten, die sich in den beiden Bildblöcken an jeweils gleichen Positionen befinden, Differenzen der den Bildpunkten zugeordneten Bildinformationswerte ermittelt, und die Beträge oder ganzzahlige Potenzen der so ermittelten Differenzen werden aufaddiert. Der so erhaltene Wert bildet ein Maß für die Übereinstimmung zwischen den Bildblöcken. Die Übereinstimmung zwischen den Bildblöcken, und damit die Qualität eines zu testenden Bewegungsvektors, ist dabei umso höher, je geringer der so ermittelte Wert, der auch als Abstandsmaß bezeichnet wird, ist. Verfahren zur Ermittelung eines Abstandsmaßes zwischen Bildblöcken und Verfahren zur Verwendung eines solchen Abstandsmaßes zur Auswahl eines von mehreren zu testenden Bewegungsvektoren, die auch als Testvektoren bezeichnet werden, sind hinlänglich bekannt, so dass auf weitere Ausführungen hierzu verzichtet werden kann.

Zum Testen eines Bewegungsvektors ist bezugnehmend auf die vorangehenden Ausführungen ein Zugriff auf Bildinformationswerte von Bildpunkten solcher Bildblöcke erforderlich, deren Positionen im ersten und zweiten Bild F, F' durch den zu testenden Bewegungsvektor vorgegeben sind. Um eine Bewegungsschätzung, und somit die damit verbundenen Rechenoperationen zum Testen von Bewegungsvektoren in Echtzeit durchführen zu können, sind Bildspeicher mit kurzen Zugriffszeiten erforderlich. Bildspeicher, die in der Lage sind, ein ganzes Bild zu speichern, die also in der Lage sind, die Bildinformationswerte zu allen Bildpunkten eines Bildes zu speichern, besitzen entweder zu lange Zugriffszeiten, um ein solches Testen von Bewegungsvektoren in Echtzeit zu ermöglichen, oder sind zu teuer, und damit für die genannte Anwendung zu unwirtschaftlich.

Es ist daher vorgesehen, zum Testen eines Bewegungsvektors Bildausschnitte der beiden benachbarten Bilder F, F' in Zwischenspeichern abzuspeichern, die über entsprechend kurze Zugriffszeiten verfügen. Die in den Zwischenspeichern gespeicherten Bildausschnitte sind dabei kleiner als die ersten und zweiten Bilder F, F'. Die Bilder F, F' besitzen beispielsweise eine Breite von w1 Bildpunkten und eine Höhe von h1 Bildpunkten, während die Bildausschnitte eine Breite von w2 Bildpunkten und eine Höhe von h2 Bildpunkten besitzen, wobei w2 < w1 und/oder h2 < h1 gilt. Mit S ist in Figur 2 ein erster Bildausschnitt des ersten Bildes F und mit S' ist ein zweiter Bildausschnitt des Bildes F' bezeichnet, die zum Testen eines Bewegungsvektors in einem ersten und einem zweiten Zwischenspeicher abgespeichert werden. Die Position dieser Bildausschnitte innerhalb der ersten und zweiten Bilder F, F' ist dabei grundsätzlich abhängig von der Lage des Blocks $(x, y)_{i-\alpha}$ innerhalb des Blockrasters. Der erste Bildausschnitt S und der zweite Bildausschnitt S' sind darüber hinaus gegeneinander versetzt, das heißt eine Position des ersten Bildausschnitts S innerhalb des ersten Bildes F unterscheidet sind von einer Position des zweiten Bildausschnitts S' innerhalb des zweiten Bildes F'. Für die nachfolgende Erläuterung sei angenommen, dass die Position der Bildausschnitte S, S' innerhalb der ersten und zweiten Bilder F, F' durch die Position der linken oberen Ecke definiert ist. Der erste Bildausschnitt S befindet sich an einer ersten Position (u, v), während sich der zweite Bildausschnitt S' von einer zweiten Position (u', v') befindet. Für einen Versatz (Δu, Δv) zwischen diesen zwei Positionen gilt in diesem Fall:

$$(\Delta u, \Delta v) = (u, v) - (u', v') \qquad\qquad (1).$$

Dieser Versatz umfasst zwei Komponenten, eine horizontale Komponente Δu und eine vertikale Komponente Δv.

Sofern der Versatz zwischen den beiden Bildausschnitten S, S' bezogen auf die zu testenden Bewegungsvektoren korrekt gewählt ist, lassen sich bei diesem Verfahren auch Bewegungsvektoren testen, die schnelle Bewegungen zwischen den beiden Bildern F, F' repräsentieren, die also länger sind als die Abmessungen der in den Zwischenspeichern abgespeicherten Bildausschnitte. Der zweite Bewegungsvektor $v2(x, y)_i$ gemäß Figur 2 ist ein solcher "langer" Bewegungsvektor, der in dem Beispiel eine horizontale Komponente besitzt, die größer ist als die Breite w2 der Bildausschnitte. Ein solcher Bewegungsvektor ließe sich dann nicht testen, wenn in den Zwischenspeichern solche Bildausschnitte gespeichert würden, die sich in dem ersten und zweiten Bild F, F' an der gleichen Position befinden.

Zum Vergleich sind in Figur 2 zwei solche Bildausschnitte $S_0$, $S_0'$ dargestellt, die sich in beiden Bildern F, F' an der gleichen Position ($u_0$, $v_0$) befinden. Die durch den zweiten Bewegungsvektor v2(x, y)$_{i-\alpha}$ repräsentierten Bildblöcke B2, B2' liegen jeweils außerhalb dieser Bildausschnitte $S_0$, $S_0'$, so dass dieser Bewegungsvektor unter Verwendung dieser Bildausschnitte $S_0$, $S_0'$ nicht getestet werden könnte. Ist hingegen ein Versatz zwischen den Positionen der gespeicherten Bildausschnitte S, S' vorhanden, der so gewählt ist, dass die den zu testenden Bewegungsvektoren in dem ersten Bild S zugeordneten Bildblöcke B1, B2 innerhalb des ersten Bildausschnitts S liegen und dass die den zu testenden Bewegungsvektoren innerhalb des zweiten Bildes F' zugeordneten Bildblöcke B1', B2' innerhalb des zweiten Bildausschnitts S' liegen, so können auch lange Bewegungsvektoren getestet werden, ohne dass hierzu größere und damit kostenintensivere Zwischenspeicher erforderlich wären.

Der Versatz ($\Delta u$, $\Delta v$) ist abhängig von einer zuvor für die Bildfolge, die die ersten und zweiten Bilder, F, F' umfasst, ermittelten Bewegungsinformation. Diese Bewegungsinformation ist beispielsweise abhängig von Bewegungsvektoren eines bereits zuvor für Bilder der Bildfolge ermittelten Bewegungsvektorfeldes. V(i-m) bezeichnet in der nachfolgenden Erläuterung allgemein ein Vektorfeld, das für ein zeitlich vorangehendes Originalbild der Bildfolge oder für ein zeitlich vorangehendes Zwischenbild der Bildfolge ermittelt wurde.

Für den Versatz zwischen den Bildausschnitten beim Testen eines Bewegungsvektors eines momentanen Vektorfeldes V(i) gilt dabei allgemein:

$$(\Delta u, \Delta v) = f(V(i - \alpha - m)) \qquad (2).$$

Dieser Versatz ($\Delta u$, $\Delta v$) ist also eine Funktion eines zuvor für die Bildfolge ermittelten Vektorfeldes V(i-$\alpha$-m). Bezugnehmend auf das Beispiel gemäß Figur 1 bedeutet dies, dass ein Versatz zum Testen von Bewegungsvektoren des Vektorfeldes V(i-$\alpha$) als Funktion des zuvor ermittelten Bewegungsvektorfeldes V(i--1) berechnet werden kann. Bei dem Beispiel gemäß Figur 1 kann der Versatz zum Testen eines Bewegungsvektors des Bewegungsvektorfeldes V(i-$\alpha$) des Zwischenbildes F(i-$\alpha$) beispielsweise als Funktion eines zuvor für das Originalbild F(i-1) ermittelten Bewegungsvektorfeldes V(i-1) ermittelt werden.

Selbstverständlich kann der Versatz ($\Delta u$, $\Delta v$) auch abhängig von mehreren zuvor ermittelten Bewegungsvektorfeldern berechnet werden, so dass allgemein gilt:

$$(\Delta u, \Delta v) = f(V(i - \alpha - m), ... V(i - \alpha - n)) \qquad (3).$$

Man macht sich hierbei zu Nutze, dass in Bildern einer Bildfolge vorhandene Bewegung in vielen Fällen über mehrere Bilder hinweg vorhanden ist. Bei Anwendung eines rekursiven Bewegungsschätzverfahrens, bei dem die zu testenden Bewegungsvektoren eines momentanen Bewegungsvektorfeldes beispielsweise abhängig von den Bewegungsvektoren eines zuvor für die Bildfolge ermittelten Bewegungsvektorfeldes ausgewählt werden, beeinflusst die zuvor für die Bildfolge ermittelte Bewegung, die zu testenden Bewegungsvektoren. Andererseits beeinflusst diese Bewegungsinformation auch den Versatz zwischen den Bildausschnitten, die zum Testen der Bewegungsvektoren verwendet werden. Wurden beispielsweise zuvor schnelle Bewegungen, das heißt lange Bewegungsvektoren, für die Bildfolge ermittelt, so sind für das momentane Bewegungsvektorfeld unter Umständen lange Bewegungsvektoren zu testen. Eine Einstellung des Versatzes zwischen den für den Test notwendigen Bildausschnitten abhängig von einer für vorangehende Bilder ermittelten Bewegungsinformation ermöglicht eine korrekte Einstellung dieses Versatzes, so dass auch lange Bewegungsvektoren getestet werden können.

Bei einem Ausführungsbeispiel ist vorgesehen, den Versatz ($\Delta u$, $\Delta v$) beim Testen der Bewegungsvektoren eines Bewegungsvektorfeldes für alle zu testenden Bewegungsvektoren gleich zu wählen. Dieser Versatz ist beispielsweise abhängig vom Mittelwert der Bewegungsvektoren eines zuvor ermittelten Bewegungsvektorfeldes einzustellen. Der Mittelwert der Bewegungsvektoren eines Bewegungsvektorfeldes wird beispielsweise dadurch berechnet, dass die horizontalen Komponenten der einzelnen Bewegungsvektoren aufaddiert werden und dass die vertikalen Komponenten der einzelnen Bewegungsvektoren aufaddiert werden und dass die so erhaltenen Summen durch die Anzahl der berücksichtigen Bewegungsvektoren dividiert werden. Ergebnis ist ein mittlerer Bewegungsvektor für das zuvor ermittelte Bewegungsvektorfeld V(i - m). Dieser mittlere Bewegungsvektor kann unmittelbar als Versatz ($\Delta u$, $\Delta v$) verwendet werden

kann, dessen horizontale Komponente kann also als horizontale Komponente $\Delta u$ des Versatzes und dessen vertikale Komponente als vertikale Komponente $\Delta v$ des Versatzes verwendet werden. Bei diesem Verfahren wird für alle Bildbereiche, für die Bewegungsvektoren zu testen sind, und damit für alle Bewegungsvektoren, die für einen Bildbereich zu testen sind, derselbe Versatz gewählt.

Anstatt den Mittelwert einiger oder aller Bewegungsvektoren eines zuvor ermittelten Bewegungsvektorfeldes zu bilden, können die Bewegungsvektoren eines oder mehrerer zuvor ermittelter Bewegungsvektorfelder einer beliebigen Filterung unterzogen werden, um einen Filterwert zu erhalten, der den beim Testen verwendeten Versatz repräsentiert. So kann beispielsweise der Versatz so eingestellt werden, dass er abhängig ist vom kleinsten/kürzesten Bewegungsvektor eines zuvor ermittelten Bewegungsvektorfeldes oder dass er abhängig ist vom größten/längsten Bewegungsvektor des zuvor ermittelten Bewegungsvektorfeldes.

Anstatt den Versatz für alle zu testenden Bewegungsvektoren des Vektorfeldes V(i) - d.h. für Bildbereiche und für alle Bewegungsvektoren, die für einen Bildbereich zu testen sind - gleich zu wählen, besteht auch die Möglichkeit, diesen Versatz für einzelne zu testende Bewegungsvektoren unterschiedlich einzustellen. So kann der Versatz beispielsweise von Bildbereich zu Bildbereich variieren; der Versatz zum Testen der einem Bildbereich zugeordneten Bewegungsvektoren kann sich also von Bildbereich zu Bildbereich unterscheiden.
Der Versatz ($\Delta u$, $\Delta v$) ist in diesem Fall beispielsweise abhängig von Bewegungsvektoren in einem oder mehreren zuvor ermittelten Bewegungsvektorfeldern, die sich an der selben Position wie der zu testende Bewegungsvektor innerhalb des Vektorfeldes befinden, oder die sich an benachbarten Positionen wie der zu testende Bewegungsvektor befinden. Für einen zu testenden Bewegungsvektor an der Position $(x, y)_{i-\alpha}$ des Blockrasters werden für die Berechnung des Versatzes beispielsweise solche Bewegungsvektoren in vorangehenden Vektorfeldern berücksichtigt, die sich in diesen Vektorfeldern an der Position $(x, y)$ oder an benachbarten Positionen $(x - a, y - b)$ befinden, wobei beispielsweise a und b ganzzahlige Zahlen sind, die beispielsweise zwischen -2 und 2 liegen.

Darüber hinaus kann der Versatz für einzelne zu testende Bewegungsvektoren eines Bildbereiches unterschiedlich sein. Dies ist beispielsweise dann sinnvoll, wenn sich die für einen Bildbereich zu testenden Bewegungsvektoren hinsichtlich ihrer Länge stark unterscheiden. In diesem Fall werden die einzelnen Testvektoren unter Berücksichtigung ihrer Länge und/oder ihrer gegenseitigen vektoriellen Differenz in verschiedene Gruppen unterteilt und für das Testen der einzelnen Gruppen wird jeweils ein unterschiedlicher Versatz gewählt. Unter dem "Testen einer Gruppe" ist in diesem Zusammenhang das Testen der einzelnen Bewegungsvektoren einer Gruppe zu verstehen. Im einfachsten Fall werden hierbei zwei Gruppen mit Testvektoren gebildet: eine erste Gruppe mit kürzeren Testvektoren; und eine zweite Gruppe mit längeren Testvektoren. Der Versatz für die Gruppe mit den kürzeren Testvektoren kann dabei insbesondere Null sein.

Unterschiedliche Versatzwerte für einen Bildbereich mit einem zu testenden Bewegungsvektor, der sich an der Position (x,y) befindet, werden beispielsweise dadurch ermittelt, dass Bewegungsvektoren aus vorangehenden Vektorfeldern untersucht werden, die sich in diesen Vektorfeldern an der Position $(x, y)$ oder an benachbarten Positionen $(x - a, y - b)$ befinden. a und b sind in diesem Zusammenhang beispielsweise ganzzahlige Zahlen, die beispielsweise zwischen -2 und 2 liegen. Unter Berücksichtigung der Länge dieser Bewegungsvektoren können die einzelnen Versatzwerte beispielsweise dadurch ermittelt werden, dass die einzelnen Bewegungsvektoren unter Berücksichtigung ihrer Länge in unterschiedliche Gruppen unterteilt werden und dass anhand jeder Gruppe ein Versatz ermittelt wird, indem die Bewegungsvektoren der Gruppe einer der oben erläuterten Filterungen, wie z.B. einer Mittelwertbildung, unterzogen werden. Die Einteilung der Bewegungsvektoren in die einzelnen Gruppen erfolgt beispielsweise derart, dass der Betrag eines Differenzvektors, der durch Subtrahieren zweier beliebiger Vektoren der Gruppe entsteht, kleiner ist als ein vorgegebener Schwellenwert. Die Anzahl der einzelnen Gruppen - und damit die Anzahl der unterschiedlichen Versatzwerte - kann dabei variieren, und zwar abhängig davon, wie stark die einzelnen Bewegungsvektoren, die zur Ermittlung der Versatzwerte herangezogen werden, sich voneinander unterscheiden.

Auch eine Kombination der zuvor genannten Varianten ist möglich. So besteht beispielsweise die Möglichkeit, zwei oder mehr unterschiedliche Versätze auszuwählen und diese unterschiedlichen Versätze auf alle Bildbereiche gleichermaßen anzuwenden. Die zu testenden Bewegungsvektoren werden hierbei unter Berücksichtigung ihrer Länge in verschiedene Gruppen unterteilt und die Bewegungsvektoren einer Gruppe werden unter Verwendung jeweils eines der unterschiedlichen Versätze getestet. Die unterschiedlichen Versatzwerte werden in zuvor erläuterter Weise beispielsweise dadurch ermittelt, dass die einzelnen Bewegungsvektoren eines oder mehrerer zuvor erläuterter Bewegungsvektorfelder in unterschiedliche Gruppen eingeteilt werden und dass unter Verwendung einer jeden dieser Gruppen ein Versatz durch Filtern der einzelnen Bewegungsvektoren dieser Gruppe ermittelt wird.

Bei einer einfachen Variante werden zwei unterschiedliche Versätze ausgewählt, von denen einer beispielsweise Null ist.

Die absolute Position der beiden Bildausschnitte S, S' in dem ersten und zweiten Bild F, F' ist abhängig von der Position (x, y) des zu testenden Bewegungsvektors innerhalb des Blockrasters und außerdem von dem zu berücksichtigenden Versatz ($\Delta u$, $\Delta v$). Repräsentiert das Blockraster des Bewegungsvektorfeldes ein zu interpolierendes Zwischenbild, so kann die absolute Position der ersten und zweiten Bildausschnitte S, S' außerdem von der Interpolationsphase abhängig sein, die dem zu testenden Bewegungsvektor zugeordnet ist. Für die Position (u1, v1) des ersten Bildausschnitts S, sowie für die Position (u2, v2) des zweiten Bildausschnitts S' gilt in diesem Fall beispielsweise:

$$(u1, v1) = (u_0 - \alpha \cdot \Delta u, \; v_0 - \alpha \cdot \Delta v) \qquad (4a)$$

$$(u2, v2) = (u_0 - (1 - \alpha) \cdot \Delta u, \; v_0 - (1 - \alpha) \cdot \Delta v) \qquad (4b)$$

$\alpha$ bezeichnet hierbei die Interpolationsphase die Werte zwischen 0 und 1 annehmen kann. $(u_0, v_0)$ bezeichnet die Position eines Bildausschnitts, der so gewählt ist, dass er den Block $(x, y)_i$ des Blockrasters des Bewegungsvektorfeldes umfasst. Bei einem Beispiel ist vorgesehen, dass die Position $(u_0, v_0)$ dieses Bildausschnittes so gewählt ist, dass der Block $(x, y)$ des Blockrasters wenigstens annähernd in der Mitte dieses Bildausschnitts liegt. Dieser Bildausschnitt entspricht beispielsweise einem der in Figur 3 dargestellten Bildausschnitte $S_0$, $S_0$', die sich innerhalb der beiden Bilder F, F' an der jeweils gleichen Position befinden.

Die Position $(u_0, v_0)$, an denen sich die Bildausschnitte $S_0$, $S_0$' befinden, definiert eine Grundposition für die beiden zum Testen ausgewählten Bildausschnitte S, S'. Die Positionen dieser Bildausschnitte S, S' sind dabei gegenüber dieser Grundposition verschoben. Die Verschiebung der beiden Bildausschnitte S, S' gegenüber dieser Grundposition $(u_0, v_0)$ ist dabei gemäß der Gleichungen (4a) und (4b) abhängig von dem zuvor ermittelten Versatz und abhängig von der Interpolationsphase. Gilt für die Interpolationsphase beispielsweise $\alpha=0$, so entspricht die Position des ersten Bildausschnitts S der Grundposition, während die Position des zweiten Bildausschnitts S' gegenüber dieser Grundposition um den Versatz $(\Delta u, \Delta v)$ verschoben ist. Gilt für die Interpolationsphase beispielsweise $\alpha=1$, so entspricht die Position des zweiten Bildausschnitts S' der Grundposition, während die Position des ersten Bildausschnitts S' gegenüber dieser Grundposition um den Versatz $(\Delta u, \Delta v)$ verschoben ist.

Ist die zuvor ermittelte Bewegung Null, und ist damit der Versatz zwischen den ersten und zweiten Bildausschnitten S, S' gleich Null, so befinden sich die ersten und zweiten Bildausschnitte S, S' an der gleichen Position, die der Grundposition $(u_0, v_0)$ entspricht. Diese Grundposition ist in erläuterter Weise abhängig von der Lage des zu testenden Bewegungsvektors innerhalb des Blockrasters.

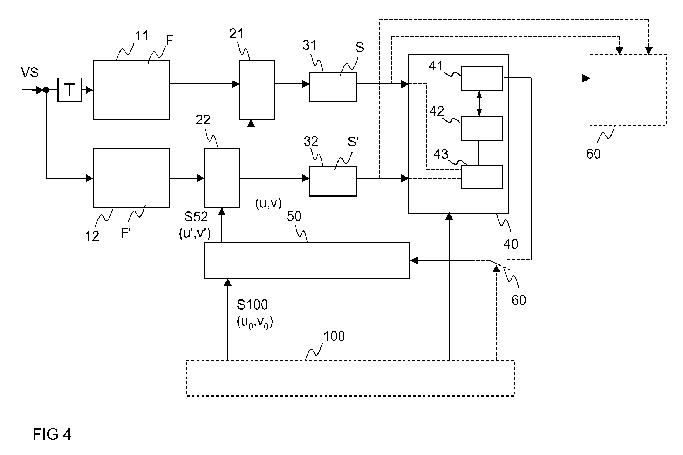

Eine Vorrichtung zum Testen eines Bewegungsvektors eines Bewegungsvektorfeldes unter Verwendung der zuvor erläuterten Verfahrensschritte wird nachfolgend anhand von Figur 4 erläutert, in der ein Blockschaltbild einer solchen Vorrichtung dargestellt ist. Die dargestellte Vorrichtung weist einen Eingang zur Zuführung eines Bildsignals VS auf, das Bildinformationen zu einer Folge von zeitlich und/oder räumlich benachbarten Originalbildern enthält. Dieses Bildsignal VS, beispielsweise ein Videosignal, ist einem zweiten Bildspeicher 12 direkt und einem ersten Bildspeicher 11 über ein Verzögerungsglied 13 zugeführt. Eine Speicherkapazität dieser beiden Bildspeicher 11, 12 ist hierbei so gewählt, dass diese Bildspeicher 11, 12 jeweils geeignet sind, ein ganzes Bild der Bildfolge zu speichern, das heißt Bildpunktwerte bzw. Bildinformationswerte zu allen Bildpunkten dieses Bildes zu speichern. Für die nachfolgende Erläuterung sei beispielsweise angenommen, dass zum Testen der Bewegungsvektoren eines Bewegungsvektorfeldes in dem ersten Bildspeicher 11 das erste Bild F gemäß Figur 3 und in dem zweiten Bildspeicher 12 das zweite Bild F' gemäß Figur 3 abgespeichert ist.

Dem ersten Bildspeicher 11 ist ein erster Zwischenspeicher 31, und dem zweiten Bildspeicher 12 ist ein zweiter Zwischenspeicher 32 abgespeichert. Speicherkapazitäten dieser Zwischenspeicher 31, 32 sind dabei jeweils so gewählt, dass diese Zwischenspeicher lediglich einen Bildausschnitt des ersten und zweiten Bildes F, F' speichern können. Für die weitere Erläuterung sei beispielsweise angenommen, dass in dem ersten Bildspeicher 31 Bildpunktwerte des ersten Bildausschnitts S gemäß Figur 3 und in dem zweiten Zwischenspeicher 32 Bildpunktwerte des zweiten Bildausschnitts S' gemäß Figur 3 abgespeichert sind. Zum Auslesen der Bildpunktwerte der ersten und zweiten Bildausschnitte S, S' aus dem ersten und zweiten Bildspeicher 11, 12 und zum Schreiben dieser Bildpunktwerte in die ersten und zweiten Zwischenspeicher 31, 32 sind Leseund Schreibschaltungen 21, 22 zwischen die Bildspeicher 11, 12 und die Zwischenspeicher 31, 32 geschaltet. Diese Leseund Schreibschaltungen erhalten über Adresssignale S51, S52 Adressinformationen, die angeben, an welcher Position innerhalb der ersten und zweiten Bilder F, F' sich die in den Zwischenspeichern 31, 32 abzuspeichernden Bildausschnitte S, S' befinden, und die damit angeben, welche Speicherbereiche des ersten und zweiten Bildspeichers 11, 12 auszulesen sind. Das erste Adresssignal S51 repräsentiert beispielsweise die Position (u, v) der linken oberen Ecke des ersten Bildausschnitts S, während das zweite Adresssignal S52 die Position (u', v') der linken oberen Ecke des zweiten Bildausschnitts S' repräsentiert. Eine Information über die horizontalen und vertikalen Abmessungen, das heißt über die ausgehend von diesen Positionen auszulesenden Speicherbereiche des ersten und zweiten Bildspeichers 11, 12 ist in den Lese- und Schreibschaltungen 21, 22 abgespeichert.

Die ersten und zweiten Zwischenspeicher 31, 32 sind an eine Testschaltung 40 angeschlossen, die dazu ausgebildet ist, auf Bildpunktwerte zuzugreifen, die in den Zwischenspeichern 31, 32 abgespeichert sind. Diese Testschaltung 40 weist einen ersten Bewegungsvektorspeicher 41 auf, in dem Bewegungsvektoren wenigstens eines zuvor für Bilder der Bildfolge ermittelten Vektorfeldes abgespeichert sind. "Bilder der Bildfolge" können in diesem Zusammenhang Originalbilder der Bildfolge sein, können jedoch auch zu interpolierende Zwischenbilder sein, für deren Interpolation ein Bewegungsvektorfeld benötigt wird. Zu Beginn des Verfahrens, wenn also noch keine Bewegungsschätzung stattgefunden hat, sind beispielsweise Anfangswerte, beispielsweise Nullvektoren, in diesem Vektorspeicher 41 abgespeichert.

Die Testschaltung 40 weist außerdem eine Testvektoreinheit 42 auf, die dazu ausgebildet ist, die zu testenden Bewegungsvektoren bereitzustellen. Die Testschaltung 40 umfasst außerdem eine Berechnungseinheit, der die einzelnen durch die Testvektoreinheit 42 bereitgestellten Testvektoren zugeführt sind und die aus dem ersten und zweiten Zwischenspeicher 31, 32 die Bildpunktwerte der Bildblöcke ausliest, die durch den zu testenden Bewegungsvektor in dem ersten und zweiten Bild F, F' repräsentiert sind, und die das Abstandsmaß dieser Bildblöcke ermittelt. Die dargestellte Testeinheit 40 kann Teil einer Einheit zur Bewegungsschätzung (nicht dargestellt) sein, die die durch die Berechnungseinheit 43 ermittelten Abstandsmaße auswertet und die anhand der für einzelne Testvektoren ermittelten Abstandsmaße Bewegungsvektoren des Bewegungsvektorfeldes ($V(i-\alpha)$ gemäß Figur 3) auswählt. Diese Bewegungsvektoren werden dann beispielsweise in den Vektorspeicher 41 geschrieben und stehen dann für die Erzeugung von Testvektoren eines nachfolgend zu ermittelnden Bewegungsvektorfeldes zur Verfügung.

Es sei angenommen, dass ein Bewegungsvektorfeld zu einem Originalbild oder einem Zwischenbild einer Bildfolge ermittelt werden soll. Als Testvektoren für die Ermittlung eines Bewegungsvektors zu einem Bildblock an einer gegebenen Rasterposition dieses Bildes werden beispielsweise solche Bewegungsvektoren ausgewählt, die bereits für Bildblöcke ermittelt wurden, die zeitlich und/oder räumlich benachbart zu dem Bildblock mit der gegebenen Rasterposition angeordnet sind. Ein räumlich benachbarter Bildblock ist hierbei ein Bildblock, der sich in demselben Bild aber an einer räumlich benachbarten Position befindet; ein zeitlich benachbarter Bildblock ist hierbei ein Bildblock, der sich an derselben räumlichen Position jedoch in einem zeitlich vorangehenden Bild befindet; und ein zeitlich und räumlich benachbarter Bildblock ist hierbei ein Bildblock, der sich an einer benachbarten räumlichen Position in einem zeitlich vorangehenden Bild befindet. Ein "zeitlich vorangehendes Bild" ist in diesem Zusammenhang ein Originalbild oder ein bereits interpoliertes Bild.

Die Bewegungsvektoren eines Bewegungsvektorfeldes können beispielsweise einem Interpolator 60 zugeführt werden, der unter Verwendung dieser Bewegungsvektoren und unter Verwendung der in den Zwischenspeichern 31, 32 abgespeicherten Bildpunktwerten ein Zwischenbild interpoliert, das räumlich und zeitlich zwischen dem ersten und zweiten Bild F, F' liegt. Ein solches Vorgehen ist grundsätzlich bekannt, so dass hierzu keine weiteren Ausführungen erforderlich sind.

Zur Erzeugung der Adresssignale S51, S52 ist eine Adressierungseinheit 50 vorhanden, die auf den Vektorspeicher 41 zugreift, in dem Bewegungsvektoren wenigstens eines zuvor ermittelten Bewegungsvektorfeldes abgespeichert sind. Die Adressierungseinheit 50 erzeugt die Adresssignale S51, S52 abhängig von einer Bewegungsinformation, die durch wenigstens einige der Bewegungsvektoren, die in dem Vektorspeicher 41 abgespeichert sind, repräsentiert ist. Die Adressierungseinheit 50 erzeugt die Adresssignale S51, S52 außerdem abhängig von einem Basis-Adresssignal S100. Dieses Basis-Adresssignal repräsentiert bezugnehmend auf Figur 3 beispielsweise die Position eines Bildausschnittes, der die Blockrasterposition (x, y) des zu testenden Bewegungsvektors umfasst. Dieses Basis-Adresssignal wird beispielsweise durch eine zentrale Ablaufsteuerung 100 zur Verfügung gestellt, die auch den Testvorgang durch die Testeinheit 40 steuert und die damit vorgibt, für welche Position des Bewegungsvektorfeldes bzw. für welche Blockrasterposition ein Bewegungsvektor zu testen ist. Bezugnehmend auf Figur 3 entspricht die durch das Basis-Adresssignal S100 repräsentierte Adressinformation beispielsweise der Position ($u_0, v_0$) der Bildausschnitte $S_0, S_0'$. Die Adressierungseinheit 50 ermittelt den Versatz zwischen den ersten und zweiten Bildausschnitten S, S' und berechnet die ersten und zweiten Adresssignale S51, S52 unter Berücksichtigung dieses Versatzes aus dem Basis-Adresssignal S100.

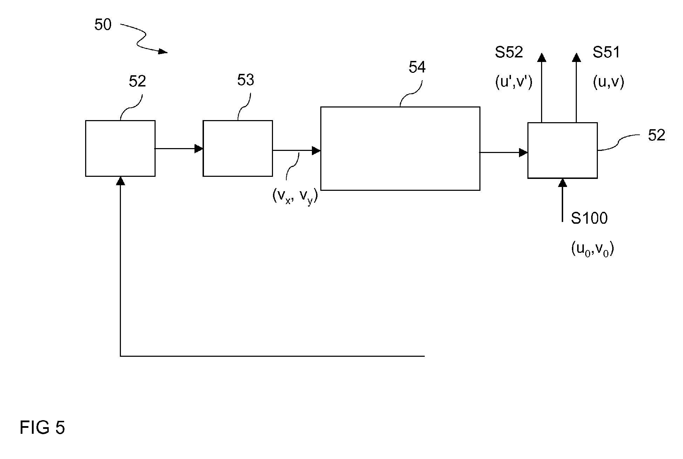

Ein Beispiel der Adressierungsschaltung 50 ist in Figur 5 als Blockschaltbild dargestellt. Diese Adressierungsschaltung 50 weist eine Auswahleinheit 52 auf, die dazu ausgebildet ist, aus dem Vektorspeicher (41 in Figur 4) eine Gruppe von Bewegungsvektoren auszuwählen. Diese Gruppe von Bewegungsvektoren kann dabei alle Bewegungsvektoren eines in dem Vektorspeicher 41 abgespeicherten Bewegungsvektorfeldes umfassen, beispielsweise dann, wenn für alle zu testenden Vektoren eines Bewegungsvektorfeldes ein gleicher Versatz zwischen dem ersten und zweiten Bildausschnitt (S, S' in Figur 3) eingestellt werden soll. Diese Gruppe von Bewegungsvektoren kann jedoch auch nur eine Untergruppe von Bewegungsvektoren eines oder mehrerer Bewegungsvektorfelder umfassen, beispielsweise solche Bewegungsvektoren, die in dem abgespeicherten Bewegungsvektorfeld an Positionen liegen, die identisch oder benachbart zu der Position ist, an der sich der zu testende Bewegungsvektor befindet.

Der Auswahlschaltung 52 ist ein erstes Filter 53 nachgeschaltet, das die durch die Auswahlschaltung 52 ausgewählten Bewegungsvektoren filtert. Dieses Filter 53 ist beispielsweise ein Mittelwertfilter, das den Mittelwert der ausgewählten Bewegungsvektoren bildet, ein Minimalwertfilter, das den kleinsten/kürzesten der ausgewählten Bewegungsvektoren ermittelt, oder ein Maximalwertfilter, das den größten/längsten der ausgewählten Bewegungsvektoren ermittelt. Am Ausgang dieses ersten Filters 53 steht eine Bewegungsinformation zur Verfügung, die eine horizontale $v_x$ und eine vertikale $v_y$ Bewegungskomponente umfasst und die eine Information über die Bewegung enthält, die durch die Bewegungsvektoren repräsentiert ist, die durch die Auswahleinheit 52 ausgewählt wurden. Diese erste Bewegungs-information ($v_x$, $v_y$) ist einem zweiten Filter 54 zugeführt, das beispielsweise ein PI-Filterverhalten besitzt und an dessen Ausgang der Offset ($\Delta u$, $\Delta v$) zur Verfügung steht. Dieser Offset ($\Delta u$, $\Delta v$) ist einer Adressberechnungseinheit 51 zusammen mit dem Basis-Adresssignal S100 zugeführt. Diese Berechnungseinheit 51 erzeugt das erste und zweite Adresssignal abhängig von dem Versatz und dem Basis-Adresssignal, und gegebenenfalls abhängig von der Interpolationsphase, wie dies beispielsweise anhand der Gleichungen (4a) und (4b) erläutert wurde.

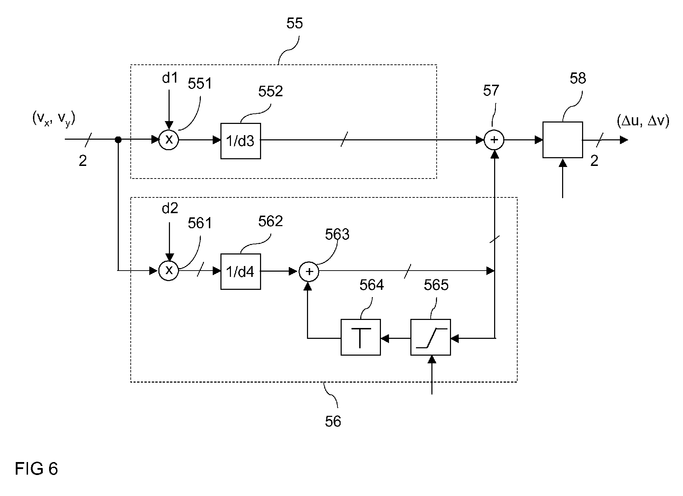

Figur 6 zeigt ein mögliches Realisierungsbeispiel des zweiten Filters 54. Dieses zweite Filter 54 enthält ein Proportionalfilter 55 und ein Integralfilter 56, die parallel geschaltet sind und deren Filterausgangswerte durch einen Addierer 57 miteinander addiert werden. Am Ausgang dieses Addierer 57 steht die Versatzinformation ($\Delta u$, $\Delta v$) zur Verfügung. Optional kann diesem Addierer 57 ein Begrenzer 58 nachgeschaltet sein, der das Ausgangssignal des Addierers 57 zu positiven Werten hin oder zu negativen Werten hin begrenzt. Es sei angemerkt, dass die beiden Filter selbstverständlich jeweils zwei Verarbeitungszweige besitzen, nämlich einen ersten Verarbeitungszweig für die hori-zontale Komponente $\Delta u$ der Versatzinformation, und einen zweiten Verarbeitungszweig für die vertikale Komponente $\Delta v$ der Versatzinformation.

Das Proportionalfilter 55 umfasst einen Verstärker 551 zur Verstärkung der ersten Bewegungsinformation ($v_x$, $v_y$) und einem ersten Verstärkungsfaktor d1. Das Integralfilter 56 weist einen Verstärker 561 auf, der die erste Bewe-gungsinformation ($v_x$, $v_y$) mit einem zweiten Verstärkungsfaktor d2 multipliziert. Das Ausgangssignal dieses Verstärkers 561 ist einem Addierer 563 zugeführt, der das Ausgangssignal dieses Addierers zu einem durch ein Verzögerungsglied 564 verzögerten Ausgangssignal des Addierers 563 addiert. Hierdurch ergibt sich eine Integration mit der ersten Be-wegungsinformation $V_x$, $V_y$. Das Ausgangssignal des Addierers 563 des Integralfilters bildet das Ausgangssignal dieses Integralfilters, das dem Addierer 57 zugeführt ist.

Der Vorteil des Vorsehens eines zweiten Filters 54 mit PI-Verhalten besteht darin, dass durch die Auswahlschaltung 52 lediglich Bewegungsvektoren eines einzelnen zuvor ermittelten Bewegungsvektorfeldes ausgewählt werden müssen, dass bedingt durch das Integralverhalten des zweiten Filters 54 dennoch Bewegungsinformation in die Berechnung des Versatzes ($\Delta u$, $\Delta v$) einfließt, die aus Bewegungsvektorfeldern resultiert, die weiter in der Vergangenheit berechnet wurden.

Abschließend sei noch darauf hingewiesen, dass Bewegungsvektoren eines Bewegungsvektorfeldes, die aus Testvektoren resultieren, die auf die zuvor erläuterte Weise getestet wurden, um einen Offsetwert zu korrigieren sind, der dem Versatz zwischen den Bildausschnitten S, S' beim Testen der Vektoren entspricht. Ein solcher Offset ist dann nicht zu berücksichtigen, wenn die Bewegungsvektoren zur Bildpunktinterpolation verwendet werden und wenn bei der Bildpunktinterpolation, wie in Figur 4 dargestellt unmittelbar auf die Zwischenspeicher 31, 32 zugegriffen wird.

Die Adressierungsschaltung 50 ist bei der in Figur 4 dargestellten Anordnung Teil eines Regelkreises, der zur Einstellung des Offset basierend auf zuvor ermittelten Bewegungsinformationen dient. Dieser Offset kann jedes Mal dann neu berechnet werden, wenn in der Testschaltung ein Bewegungsvektorfeld neu für ein Originalbild oder für ein Zwischenbild ermittelt wird. In die Ermittlung des Offset fließen in diesem Fall Bewegungsinformationen aus allen Bewegungsvektorfeldern ein.

Bei einem weiteren Beispiel ist vorgesehen, bei der Ermittlung des Offset nur solche Bewegungsvektorfelder bzw. Informationen nur aus solchen Bewegungsvektorfeldern zu berücksichtigen, die für Originalbilder der Bildfolge ermittelt wurden. Der Adressierungseinheit sind aus dem Vektorspeicher in diesem Fall nur Bewegungsvektoren solcher Bewegungsvektorfelder zugeführt, die für Originalbilder ermittelt wurden. Dies ist gleichbedeutend damit, dass die Regelschleife mit der Adressierungseinheit 50 während solcher Zeitdauern unterbrochen ist, während der Bewegungsvektorfelder für Zwischenbilder ermittelt werden. Bei diesem Verfahren wird ein zuletzt für ein Originalbild ermittelter Offset für die Zwischenbilder beibehalten, bis anhand des Vektorfeldes für das nächste Originalbild ein neuer Offset berechnet wird. Die Auswahl der in die Zwischenspeicher 31, 32 einzulesenden Daten unter Berücksichtigung des Offset erfolgt auch bei diesem Verfahren unter Berücksichtigung der Gleichungen 4a und 4b. Eine Unterbrechung der Regelschleife kann durch einen Schalter 60 erfolgen, der in Figur 4 schematisch (gestrichelt) dargestellt ist und der durch die Steuerschaltung 100 angesteuert ist.

Bei einem weiteren Beispiel ist vorgesehen, einen Offset basierend nur auf solchen Bewegungsinformationen zu ermitteln, die durch Vektorfelder für Originalbilder repräsentiert sind, diesen Offset bei der Ermittlung von Bewegungsvektorfeldern für Zwischenbilder nicht anzuwenden oder nur reduziert anzuwenden, wenn das Bewegungsvektorfeld oder die Bewegungsvektorfelder, anhand derer der Offset ermittelt wurde, ein vorgegebenes Offset-Modifikationskriterium erfüllt. Ein solches Kriterium ist beispielsweise dann gegeben, wenn der Mittelwert der Bewegungsvektoren dieses Vektorfeldes oberhalb eines gegebenen Wertes liegt, oder wenn eine starke Inhomogenität des Vektorfeldes vorliegt. Eine solche starke Inhomogenität liegt beispielsweise dann vor, wenn die Beträge einzelner Vektoren des Vektorfeldes stark von einem Mittelwert abweichen.

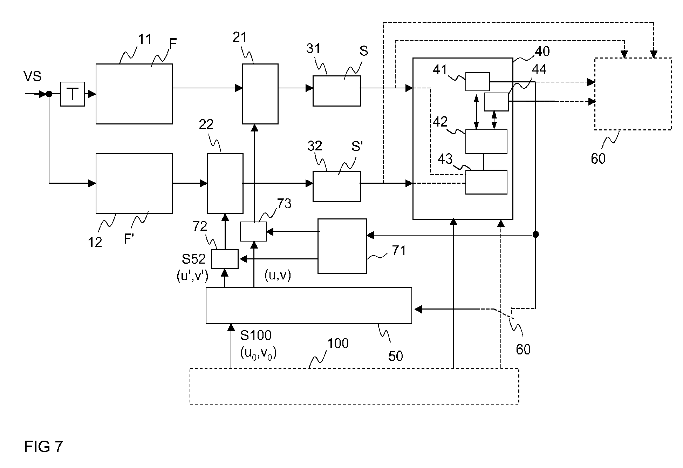

Figur 7 veranschaulicht eine Anordnung mit einer solchen Funktionalität. Diese Anordnung unterscheidet sich von der in Figur 4 dargestellten Anordnung dadurch, dass eine Auswerteschaltung 71 vorhanden ist, die auf den Vektorspeicher 41 zugreift und die dazu ausgebildet, die Bewegungsvektorfelder, die für Originalbilder ermittelt wurden, dahingehend auszuwerten, ob das Offset-Modifikationskriterium erfüllt ist. Die Auswerteschaltung 71 ist außerdem dazu ausgebildet, die durch die Adressierungseinheit 50 erzeugte Offsetinformation zu modifizieren oder zu Null zu setzen, wenn das Offset-Modifikationskriterium erfüllt ist. Zwischen die Adressierungseinheit 50 und die Lese- und Schreibschaltungen sind hierzu Offset-Modifikationsschaltungen 72, 73 geschaltet, die dazu ausgebildet sind, gesteuert durch die Auswerteschaltung 71 den durch die Adressierungsschaltung 50 erzeugten Offset für die Ermittlung von Vektorfeldern für Zwischenbilder zu Null zu setzen oder zumindest um einen vorgegebenen Faktor zu reduzieren.

Werden die Bewegungsvektorfelder für Zwischenbilder mit einem anderen Offset ermittelt als Bewegungsvektorfelder für die Originalbilder, so unterscheiden sich die Bewegungsvektorfelder für ein Originalbild und die Bewegungsvektorfelder für die nachfolgenden Zwischenbilder. Die in Figur 7 dargestellte Anordnung weist aus diesem Grund zwei Bewegungsvektorspeicher auf: einen ersten Vektorspeicher 41 für die Vektorfelder von Originalbildern, auf den die Auswerteschaltung 71 zugreift; und einen zweiten Vektorspeicher 44 für die Vektorfelder von Zwischenbildern. Die Testvektoreinheit 42 greift für die Erzeugung von Testvektoren für die Originalbilder dabei auf den ersten Vektorspeicher 41 zu, in dem das Vektorfeld für wenigstens ein vorangehendes Originalbild gespeichert ist, und greift für die Erzeugung von Testvektoren für die Zwischenbilder auf den zweiten Vektorspeicher 44 zu, in dem das Vektorfeld für wenigstens ein vorangehendes Zwischenbild gespeichert ist.

Der Interpolator 60 kann grundsätzlich dazu ausgebildet sein, auch Bilder an Originalbildlagen, also Bilder mit einer Interpolationsphase $\alpha=0$ oder $\alpha=1$ zu interpolieren oder für diese Originalbildlagen unmittelbar die in der Bildfolge vorhandenen Originalbilder zu verwenden. Im zuerst genannten Fall erhält der Interpolator ein Bewegungsvektorfeld für alle Bilder, im als zweites genannten Fall nur für die Zwischenbilder.

Das Vorsehen eines Offset zwischen den Bildausschnitten, die zu Zwecken der Bewegungsschätzung in den Speichern 31, 32 abgelegt werden, vergrößert den Schätzbereich insofern, als abhängig von dem Offset längere Vektoren getestet werden können, als dies ohne Offset der Fall wäre.

Alternativ oder zusätzlich zum Vorsehen eines Offset besteht auch die Möglichkeit, den Schätzbereich dadurch zu vergrößern, dass die in den Speichern abgespeicherten Bildausschnitte vor dem Abspeichern unterabgetastet bzw. herunterskaliert werden. Hierdurch kann in einem Zwischenspeicher gegebener Größe ein größerer Bildausschnitt abgespeichert werden. Diese Unterabtastung bzw. dieses Herunterskalieren resultiert zwar in einem Informationsverlust, der bei moderaten Skalierungsfaktoren wie z.B. Skalierungsfaktoren zwischen 0,25 und 0,5 für die Bewegungsschätzung tolerierbar ist. Zur Herunterskalierung können beliebige Skalierungseinheiten (nicht dargestellt) vorgesehen werden, die zwischen die Speicher 11, 12 und die Zwischenspeicher 31, 32 geschaltet sind. Die Skalierung kann in horizontaler und vertikaler Richtung der in den Zwischenspeichern abzuspeichernden Bildausschnitte in gleicher Weise, d.h. mit gleichen horizontalen und vertikalen Skalierungsfaktoren, erfolgen. Der horizontale und vertikale Skalierungsfaktor können sich allerdings auch unterscheiden. So ist bei einem Beispiel vorgesehen, in den Zwischenspeichern 31, 32 nur jede zweite Zeile der Bildausschnitte abzuspeichern. Hierdurch wird in vertikaler Richtung ein Skalierungsfaktor von 0,5 und in horizontaler Richtung ein Skalierungsfaktor von 1 erhalten.

Bei einem weiteren Beispiel ist vorgesehen, in jedem der Zwischenspeicher 31, 32 zwei Bildausschnitte eines Bildes derart zu speichern, dass ein erster Bildausschnitt in dem ersten Speicher einen ersten Offset gegenüber einem ersten Bildausschnitt in dem zweiten Speicher aufweist und dass ein zweiter Bildausschnitt in dem zweiten Speicher einen zweiten Offset gegenüber einem zweiten Bildausschnitt in dem zweiten Speicher aufweist, wobei der erste und der zweite Offset unterschiedlich sind. Bei diesem Verfahren können gleichzeitig zwei verschiedene Offsets "getestet" werden, bzw. können gleichzeitig Bewegungsschätzungen mit unterschiedlichen Offsets durchgeführt werden, was ebenfalls zu einer Vergrößerung des Schätzbereichs führt. Bei einem Beispiel ist vorgesehen, gleichzeitig zu der bisher erläuterten Bewegungsschätzung mit einem Offset ungleich Null eine Bewegungsschätzung mit einem Offset gleich Null durchzuführen. Die in einem Zwischenspeicher abzuspeichernden unterschiedlichen Bildausschnitte können herunterskaliert werden, wodurch trotz der erreichten Vergrößerung des Schätzbereichs keine Vergrößerung der Speicherkapazität der Zwischenspeicher 31, 32 erforderlich ist.

Im Zusammenhang mit einer Herunterskalierung der abzuspeichernden Bildausschnitte ist noch anzumerken, dass ein Bewegungsvektor, der unter Verwendung von Bildausschnitten ermittelt wurde, die herunterskaliert wurden, entsprechend nach oben skaliert werden muss. Beträgt der Skalierungsfaktor beispielsweise a, so ist der ermittelte Vektor mit dem Kehrwert 1/a zu multiplizieren bzw. skalieren, wenn der Vektor beispielsweise für eine Bildinterpolation basierend auf nichtskalierten Bilddaten verwendet werden soll.

**Patentansprüche**

1.  Verfahren zum Testen eines Bewegungsvektors, das aufweist:

Bereitstellen wenigstens einer einer Bildfolge zugeordneten Bewegungsinformation,
Speichern eines ersten Bildausschnitts eines ersten Bilds der Bildfolge in einem ersten Zwischenspeicher und Speichern eines zweiten Bildausschnitt eines zweiten Bilds der Bildfolge in einem zweiten Zwischenspeicher, wobei eine Position des ersten Bildausschnitts in dem ersten Bild und eine Position des zweiten Bildausschnitts in dem zweiten Bild einen gegenseitigen Versatz aufweisen, der von der wenigstens einen Bewegungsinformation abhängig ist,
Ermitteln eines ersten Bildblocks in dem ersten Bildausschnitt und eines zweiten Bildblocks in einem zweiten Bildausschnitt unter Verwendung des Bewegungsvektors,
Vergleichen eines Inhalts des ersten und des zweiten Bildblocks.

2.  Verfahren nach Anspruch 1, bei dem das Ermitteln der Bewegungsinformation umfasst:

Ermitteln eines Bewegungsvektorfeldes mit mehreren Bewegungsvektoren, das einem Bild der Bildfolge zugeordnet sind,
Ermitteln der Bewegungsinformation abhängig von wenigstens einem Bewegungsvektor des Bewegungsvektorfeldes.

3.  Verfahren nach Anspruch 2, bei dem das Ermitteln der Bewegungsinformation umfasst:

Filtern mehrerer Bewegungsvektoren des Bewegungsvektorfeldes zur Ermittlung eines Filterwertes,
Auswählen des Filterwertes als Bewegungsinformation.

4.  Verfahren nach Anspruch 2, bei dem die Bewegungsinformation einem Mittelwert mehrerer Bewegungsvektoren des Bewegungsvektorfeldes entspricht.

5.  Verfahren nach Anspruch 2, bei dem die Bewegungsinformation einem Mittelwert aller Bewegungsvektoren des Bewegungsvektorfeldes entspricht.

6.  Verfahren nach Anspruch 2, bei dem die Bewegungsinformation durch einen kürzesten Bewegungsvektor des Bewegungsvektorfeldes repräsentiert ist.

7.  Verfahren nach Anspruch 2, bei dem die Bewegungsinformation durch einen längsten Bewegungsvektor des Bewegungsvektorfeldes repräsentiert ist.

8.  Verfahren nach Anspruch 2, bei dem der zu testende Bewegungsvektor Teil eines zweiten Bewegungsvektorfeldes ist und bei dem die Bewegungsinformation abhängig ist von dem Bewegungsvektor, der sich in dem ersten Bewegungsvektorfeld an derselben Position wie der zu testende Bewegungsvektor befindet und/oder abhängig ist von Bewegungsvektoren, die sich in dem ersten Bewegungsvektorfeld benachbart zu der Position des zu testenden Bewegungsvektors befinden.

9.  Verfahren nach einem der vorangehenden Ansprüche, bei dem dem Bewegungsvektor eine Interpolationsphase zugeordnet ist und bei dem eine Position des ersten und zweiten Bildausschnitts innerhalb des ersten und zweiten Bildes von der Interpolationsphase abhängig ist.

10. Verfahren nach Anspruch 9,
bei dem der Bewegungsvektor Teil eines Bewegungsvektorfeldes ist,
bei dem der erste und zweite Bildausschnitt gegenüber einer Grundposition verschoben sind, wobei die Grundposition abhängig ist von der Lage des Bewegungsvektors innerhalb des Bewegungsvektorfeldes und wobei eine Verschiebung des ersten und zweiten Bildausschnittes gegenüber der Grundposition abhängig ist von der Interpolationsphase.

11. Verfahren nach Anspruch 10, bei dem für eine Position (u1, v1) des ersten Bildausschnitts in dem ersten Bild gilt:

$$(u1, v1) = (u_0 - \alpha \cdot \Delta u, \ v_0 - \alpha \cdot \Delta v)$$

und bei dem für eine Position des zweiten Bildausschnitts (u2. v2) in dem zweiten Bild gilt:

$$(u2,\ v2)\ =\ (u_0\ -\ (1\ -\ \alpha)\cdot\Delta u,\ v_0\ -\ (1\ -\ \alpha)\cdot\Delta v),$$

wobei

$\alpha$ die Interpolationsphase,
$u_0$ eine erste Positionskomponente der Grundposition,
$v_0$ eine zweite Positionskomponente der Grundposition,
$\Delta u$ eine erste Komponente des Versatzes, und
$\Delta v$ eine zweite Komponente des Versatzes

bezeichnet.

12. Verfahren nach Anspruch 10, bei dem das Bewegungsvektorfeld Bewegungsvektoren umfasst, die Bildblöcken eines zu interpolierenden Zwischenbildes zugeordnet sind.

13. Verfahren nach Anspruch 12, bei dem die Grundposition abhängig ist von der Position eines zu interpolierenden Bildblocks in dem Blockraster, dem der zu testende Bewegungsvektor zugeordnet ist.

14. Verfahren nach Anspruch 13, bei dem die Grundposition so gewählt ist, dass sich der Bildblock wenigstens annäherungsweise in der Mitte des Bildausschnitts befindet, wenn der Versatz gleich Null ist.

15. Verfahren nach einem der vorangehenden Ansprüche, bei dem ein erster Bewegungsvektor und ein zweiter Bewegungsvektor getestet werden und bei dem der erste und zweite Bildausschnitt für das Testen des ersten Bewegungsvektors einen ersten Versatz und für das Testen des zweiten Bewegungsvektors einen zweiten Versatz aufweisen.

16. Verfahren nach einem der Ansprüche 2 bis 15, bei dem Bewegungsvektorfelder für Originalbilder der Bildfolge und für zu interpolierende Zwischenbilder ermittelt werden und bei dem der Versatz nur von wenigstens einem Vektorfeld abhängig ist, das für ein Originalbild ermittelt wurde.

17. Verfahren nach Anspruch 16, bei dem der Versatz bei der Ermittlung von Bewegungsvektorfeldern für Zwischenbilder reduziert oder zu Null gesetzt wird.

**FIG 1**

F1(i)
F1(i-1)
F1(i-2)

F2(i)
F2(i-1)
F2(i-2)

V(i)
V(i-1)
V(i-2)

**FIG 2**

FIG 3

FIG 4

50

52          53                    54          S52        S51

                                              (u',v')     (u,v)

                                                          52

                        (v_x, v_y)            S100

                                              (u_0, v_0)

FIG 5

FIG 6

FIG 7

Europäisches Patentamt
European Patent Office
Office européen des brevets

# EUROPÄISCHER RECHERCHENBERICHT

**Nummer der Anmeldung**

EP 09 15 5518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 828 423 A (SERIZAWA MAKOTO [JP] ET AL) 27. Oktober 1998 (1998-10-27) | 1-8 | INV. G06T7/20 |
| Y | * Zusammenfassung; Fig. 2A-2C, 4A-4C, 6, 11, 13A-13B, 14; Spalten 1-3, 5-6, 13, 15-21, 32 * | 9-16 | |
| | ----- | | |
| X | US 7 006 100 B2 (PHONG KAH-HO [SG] ET AL) 28. Februar 2006 (2006-02-28) | 1-8 | |
| Y | * Zusammenfassung, Fig. 1, Spalten 1-8 * | 9-16 | |
| | ----- | | |
| X | HANG H-M ET AL: "MOTION ESTIMATION FOR VIDEO CODING STANDARDS" JOURNAL OF VLSI SIGNAL PROCESSING SYSTEMS FOR SIGNAL, IMAGE, AND VIDEO TECHNOLOGY, SPRINGER, NEW YORK, NY, US, Bd. 17, Nr. 2/03, 1. November 1997 (1997-11-01), Seiten 113-136, XP000724575 ISSN: 0922-5773 | 1-8 | |
| Y | * Zusammenfassung; Fig. 3-6, 15-18; Abschnitte 3.4, 6.1-6.4 * | 9-16 | RECHERCHIERTE SACHGEBIETE (IPC) |
| | ----- | | |
| X | XI Y-L ET AL: "A fast block-matching algorithm based on adaptive search area and its VLSI architecture for H.264/AVC" SIGNAL PROCESSING. IMAGE COMMUNICATION, ELSEVIER SCIENCE PUBLISHERS, AMSTERDAM, NL, Bd. 21, Nr. 8, 1. September 2006 (2006-09-01), Seiten 626-646, XP025080509 ISSN: 0923-5965 [gefunden am 2006-09-01] | 1-8 | G06T H04N G06F |
| Y | * Zusammenfassung; Fig. 2, 7, 18; Abschnitte 2.1-2.2, 3.1-3.2, 3.5 * | 9-16 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 3. Juli 2009 | Borotschnig, Hermann |

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 09 15 5518

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 00/70879 A (ST MICROELECTRONICS ASIA [SG]; OH HONG LYE [SG]; HUI YAU WAI LUCAS [SG] 23. November 2000 (2000-11-23) | 15 | |
| A | * Zusammenfassung; Fig. 4; Seiten 2, 4, 11-17 * | 1-14,16, 17 | |
| | ----- | | |
| D,Y | US 4 853 775 A (ROUVRAIS BERNARD [FR] ET AL) 1. August 1989 (1989-08-01) | 9-14,16 | |
| A | * Zusammenfassung, Fig. 11-12, Ansprüche 4-16 * | 1-8,15, 17 | |
| | ----- | | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 3. Juli 2009 | Borotschnig, Hermann |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

............................................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 15 5518

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 5828423 | A | 27-10-1998 | KEINE | | |
| US 7006100 | B2 | 28-02-2006 | EP | 1406211 A2 | 07-04-2004 |
| | | | SG | 111087 A1 | 30-05-2005 |
| | | | US | 2004141554 A1 | 22-07-2004 |
| WO 0070879 | A | 23-11-2000 | EP | 1181828 A1 | 27-02-2002 |
| | | | US | 7551673 B1 | 23-06-2009 |
| US 4853775 | A | 01-08-1989 | CA | 1329649 C | 17-05-1994 |
| | | | DE | 3870969 D1 | 17-06-1992 |
| | | | EP | 0286483 A1 | 12-10-1988 |
| | | | FR | 2624682 A2 | 16-06-1989 |
| | | | JP | 1013882 A | 18-01-1989 |
| | | | JP | 2803818 B2 | 24-09-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4853775 A, Rouvrais
- US 5072293 A, Haan
- US 6782054 B2, Bellers